# EUROPEAN PATENT APPLICATION

(11) **EP 3 334 107 A1**
(43) Date of publication of application: **13.06.2018**
(21) Application number: 16205168.4
(22) Date of filing: 19.12.2016
(51) Int. Cl.: H04L 25/02, H04L 25/03

(54) **METHOD FOR CHANNEL PRECODING AND BASE STATION AND SERVER USING THE SAME**

(30) Priority: 06.12.2016 TW 105140273
(71) Applicant: Industrial Technology Research Institute, Chutung, Hsinchu 31040 (TW)
(72) Inventor: TSAI, Chang-Lan, 302 Zhubei City, Hsinchu County (TW); LIN, Chia-Hua, 305 Xinpu Township, Hsinchu County (TW)
(74) Representative: Krauns, Christian

(57) **Abstract**

A method for channel precoding adapted to a base station is provided. An exemplary embodiment of the method includes: using a channel to communicate with a user equipment; obtaining a channel state of the channel; calculating a user equipment condition parameter(s) according to the channel state; transmitting the user equipment condition parameter(s) to a server; receiving a channel prediction parameter from the server; performing channel prediction according to the channel prediction parameter to obtain a predicted channel state of the channel; transmitting the predicted channel state to the server; receiving a precoding parameter from the server; and performing precoding according to the precoding parameter.

## Description

### TECHNICAL FIELD

The invention relates to a method for channel precoding, and a base station and a server using the same.

### BACKGROUND

With the rapid development of wireless communication technology, for example, the substantially increasing demand of Long Term Evolution (LTE) communications standard that widely used in mobile phone, user equipment (UE) and wireless transmission. To fulfill increasing user demand, base station (BS) density can be increased to serve more user equipments, especially in densely populated, such as sports grounds, shopping centers, office buildings and so on. Nevertheless, increasing the density of base station may cause the effect of signal interference between base stations in the proximity to each other. The methodology of signal transmission design to avoid signal interference between base stations is one of the technologies that can be looked into.

### SUMMARY

The invention is directed to a method for channel precoding, and a base station and a server using the same.

According to a first aspect, a method for channel precoding applicable for a base station is provided. The method includes: using a channel to communicate with a user equipment; obtaining a channel state of the channel; calculating a user equipment condition parameter(s) according to the channel state; transmitting the user equipment condition parameter(s) to a server; receiving a channel prediction parameter from the server; performing a channel prediction according to the channel prediction parameter to obtain a predicted channel state of the channel; transmitting the predicted channel state to the server; receiving a precoding parameter from the server; and performing a precoding according to the precoding parameter.

According to a second aspect, a method for channel precoding applicable for a server is provided. The method includes: receiving a user equipment condition parameter(s) from a base station; determining a channel prediction parameter according to the user equipment condition parameter(s); transmitting the channel prediction parameter to the base station; receiving a predicted channel state from the base station; calculating a precoding parameter according to the predicted channel state; and transmitting the precoding parameter to the base station.

According to a third aspect, a base station is provided. The base station includes a wireless communication unit, a channel calculation unit, a channel prediction unit and a precoding unit. The wireless communication unit is configured to use a channel to communicate with a user equipment, and obtain a channel state of the channel. The channel calculation unit is configured to calculate a user equipment condition parameter(s) according to the channel state, and transmit the user equipment condition parameter(s) to a server. The channel prediction unit is configured to receive a channel prediction parameter from the server, perform a channel prediction according to the channel prediction parameter to obtain a predicted channel state of the channel, and transmit the predicted channel state to the server. The precoding unit is configured receive a precoding parameter from the server, and perform a precoding according to the precoding parameter.

According to a fourth aspect, a server is provided. The server includes a parameter determination unit and a precoding calculation unit. The parameter determination unit is configured to receive a user equipment condition parameter(s), determine a channel prediction parameter according to the user equipment condition parameter(s), and transmit the channel prediction parameter to a base station. The precoding calculation unit is configured to receive a predicted channel state, calculate a precoding parameter according to the predicted channel state, and transmit the precoding parameter to the base station.

For understanding further the above and other aspects of the invention, exemplary embodiments of the invention are shown. The details will be described below in conjunction with the drawings.

### BRIEF DESCRIPTION OF THE DRAWINGS

FIG. 1 shows a schematic diagram of an exemplary example of user equipments that are interfered between multiple base stations;
FIG. 2 shows a block diagram of a communication system performing channel precoding in accordance with an embodiment of the invention;
FIG. 3 shows a sequence diagram between a server, base stations, and user equipments in accordance with an embodiment of the invention;
FIG. 4 shows a flowchart of channel precoding method performing by a base station in accordance with another embodiment of the invention;
FIG. 5 shows a flowchart of channel precoding method performing by a server in accordance with another embodiment of the invention;

### DETAILED DESCRIPTION

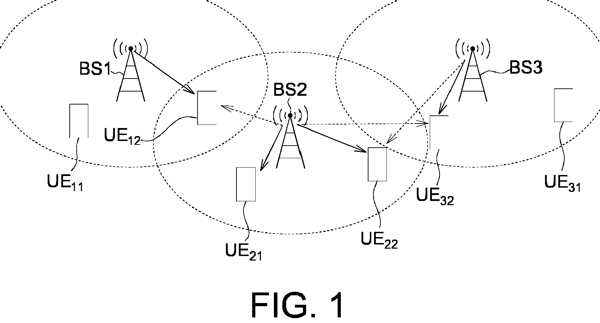

FIG. 1 shows a schematic diagram of an exemplary example of user equipments that are interfered between multiple base stations. The wireless communication system as shows in the diagram includes base stations BS1, BS2, BS3, and user equipments UE11, UE 12, UE21, UE22, UE31, UE32. Wherein a base station may be a macro base station or a small cell base station, and a user equipment may be an electronic device having wireless communication ability such as a cellphone, a tablet PC, a laptop and so on. As shows in Fig. 1, the coverage of each base station BS1, BS2, BS3 is illustrated with dashed oval. The coverage represents the geographical range of each base station that could provide wireless signaling service. The user equipment UE11 and UE12 locate within the coverage of the base station BS1, and servicing by the base station BS1. While the user equipment UE12 locates nearby the intersection of the base station BS1 and the base station BS2. The user equipment UE12 may also receive broadcasting signal(s) from the base station BS2. This constitutes signal interference to the user equipment UE12, and makes the signal demodulation of the user equipment UE12 becomes difficult. Similarly, the user equipment UE22 and UE32 both locate nearby the intersection of the base station BS2 and the base station BS3, they also will having signal interference from multiple base stations.

There are a variety of technologies that may overcome the signal interference. First kind is the interference reduction approach, for instance, using interference randomization method. Second kind is the interference elimination approach, that using signal processing technology to eliminate the interference at the signal receiving end. Third kind is the Coordinated Multi-Point Transmission (CoMP) approach, so that let the interference signal becomes a useful signal, for instance, by sharing the channel information between the base stations, join transmitting data, and using the CoMP and the multiple antenna precoding.

The aforementioned CoMP method of the third kind, one approach is coordinate with each other by the base stations. This may accomplish the coordinated beamforming and the data at the same time or the same frequency may transmit by beamforming to avoid generate interference to the user equipment(s) in other direction(s). Take the example of Fig. 1 to illustrate, at the same time or the same frequency, the base station BS1 may choose to transmit to the user equipment UE12 and the base station BS2 then avoids choosing the direction of the user equipment UE12. For example may choose the direction of the user equipment UE21. The signal of the base station BS2 may not affect the user equipment UE12 by using the beamforming technology.

Another approach of CoMP is that join precoding by antennas of multiple base stations with overlapping coverage, and the user equipments are distributed on the multiple base stations performing the precoding. These base stations join transmitting the pre-coded data to all user equipments under coverage. Because of the data transmitted by the channel had been pre-coded, so that let the original interference signal becomes a useful signal. Take the Fig. 1 as an example, the base station BS1 and base station BS2 may perform join precoding, yet base station BS2 and base station BS3 may also perform join precoding. This may not only eliminate interference but further duplicate the signal effect.

Channel information is need for performing precoding, and there is a difference in the time from obtaining the channel information to performing the precoding transmission. While channel characteristics will change over time, if the channel information update is not timely, inaccurate channel information may reduce the effect of the precoding. Therefore, may further use the channel prediction technology, by mastering the channel change model to predict the channel information at the future point of time to enhance the effect of precoding. The following exemplary embodiments will illustrate a method use channel prediction technology in combination with precoding in a wireless communication system.

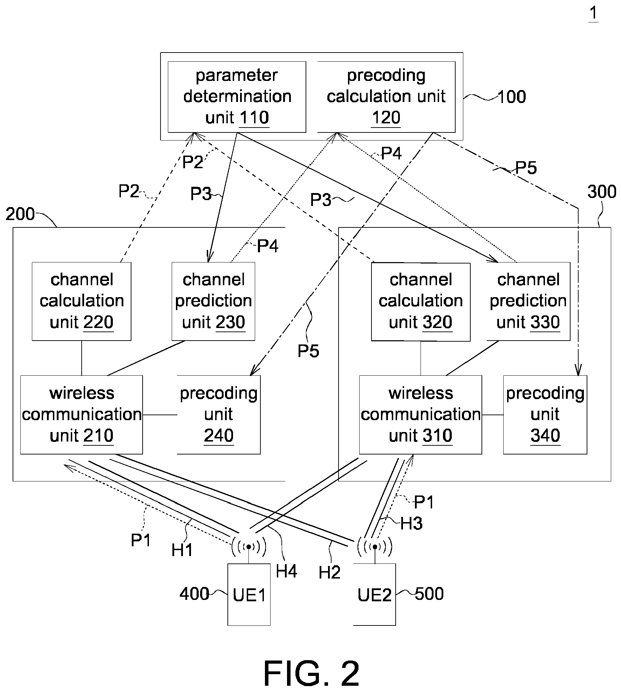

FIG. 2 shows a block diagram of a communication system performing channel precoding in accordance with an embodiment of the invention. In this embodiment, a wireless communication system 1 comprises a server 100, a base station 200, a base station 300, a user equipment 400, and a user equipment 500. The server 100, for instance, locates at a core network, the base station 200 and the base station 300, for instance, may connecting to the server 100 through a backhaul network. The server 100 may receive information from the base station 200 and the base station 300, and may transmit control signal(s) to control operation(s) of the base station 200 and the base station 300. In this embodiment, the base station 200 and the base station 300 performing channel prediction, and the channel prediction correlated control parameter(s) is transmitting by the server 100 to the base station 200 and the base station 300. Although Fig. 2 shows the server 100 is connected to two base stations, while could be understood that the precoding method illustrating below may also apply to situations that the server 100 may be connected to one base station, two base stations, or even more than two base stations.

In an embodiment, the server 100 comprises parameter determination unit 110 and precoding calculation unit 120. In an embodiment, the base station 200 comprises wireless communication unit 210, channel calculation unit 220, channel prediction unit 230 and precoding unit 240. Similarly, the base station 300 comprises wireless communication unit 310, channel calculation unit 320, channel prediction unit 330 and precoding unit 340. The aforementioned units may be a separate hardware circuit, or several units that be integrated in an Integrated Circuit (IC). In some cases, a portion or all of the units may be implemented by software or firmware module(s), the instructions are loading by the inner circuit of server 100, or the base station, to execute the corresponding function(s), and which is not be limited. The following paragraphs describe in detail operations of each unit and embodiments of precoding method in accordance with the invention.

The operation of base station 200 is similar with the base station 300 therefore the base station 200 is used as an exemplary embodiment. The wireless communication unit 210 is configured to use a channel H1 to communicate with the user equipment 400. In the step P1, the wireless communication unit 210 obtains a channel state of the channel H1. For example, the channel state may be a downlink channel response from the base station 200 to the user equipment 400.

There are several ways of implementation for the wireless communication unit 210 to obtain the channel state. Taking the Frequency Division Duplexing (FDD) as an example, the base station 200 may transmit reference signal(s) to the user equipment 400 and the user equipment 400 may perform the channel estimation according to the reference signal(s) and transmit the channel state information (CSI) back to the base station 200 through the uplink channel. On the other hand, taking the Time Division Duplexing (TDD) as an example, the base station 200 may further comprises a channel estimation unit, and the channel estimation unit may be integrated in the wireless communication unit 210, for example. The channel estimation unit may be a separate hardware circuit and be coupled to the wireless communication unit 210. The channel estimation unit is configured to receive one or more references of the user equipment 400, for instance, Sounding Reference Signal (SRS) or Demodulation Reference Signal (DMRS). The channel estimation unit may perform channel estimation according to one or more reference signals received to obtain the uplink channel response. Also may derive an equivalent downlink channel from the uplink channel using the uplink and downlink channel reciprocity effect. The aforementioned ways of implementation could obtain the channel state of the channel H1 between the user equipment 200 and the user equipment 400.

The channel calculation unit 220 is coupled to the wireless communication unit 210 and the channel calculation unit220 is configured to calculate user equipment condition parameter(s) according to the channel state, and transmit the user equipment condition parameter(s) to the server 100 at step P2. As described above, the server 100 controls the channel prediction performing by the base station 200. The base station 200 may determine the correlated control parameter(s) based on the user equipment condition parameter(s) calculated by the channel calculation unit 220.

In an embodiment, the user equipment condition parameter(s) includes a channel correlation coefficient of the channel H1, for instance, a channel response correlation in time, or a channel response correlation in frequency, or a combination of both. For example, if the calculated channel response correlation in time is high, that indicates the change over time of the channel H1 is not large and may represent the user equipment 400 currently is in a near static state. On the other hand, if the calculated channel response correlation in time is low, that indicates the change over time of the channel H1 is large and may represent the user equipment 400 currently is in a moving state. Similarly, may also use the channel response at different frequency to calculate and obtain the channel response correlation in frequency, and know the current state of the user equipment 400. As described above, the channel correlation coefficient calculated by the channel calculation unit 220 may be related to the speed of the user equipment 400, the channel correlation coefficient is used by the server 100 to determine the associated parameter(s) of the channel prediction.

In an embodiment, in step P2 the user equipment condition parameter(s) that the channel calculation unit 220 transmits to the server 120 includes at least one of the following: a speed of the user equipment 400, a Doppler frequency offset of the user equipment 400, a delay expansion of the channel H1, a time correlation coefficient of the channel H1, a frequency correlation coefficient of the channel H1, and a synchronization timing of the channel H1. The aforementioned parameters related to the current moving speed of user equipment 400, for example, by detecting the current Doppler effect of carrier frequency to calculate and obtain the moving speed, or by the synchronization timing, calculating the synchronization timing transmission delay to obtain the current moving speed of user equipment 400, or by analyzing the delay distribution of channel H1 and determining the moving speed of user equipment 400 based on a delay expansion.

The parameter determination unit 110 of server 100 is configured to receive the user equipment condition parameter(s) from the base station 200 (step P2), to determine channel prediction parameter(s) according to the user equipment condition parameter(s) and to transmit the channel prediction parameter to the base station 200 (step P3). As described above, through the user equipment condition parameter(s), the parameter determination unit 110 could know whether the current change of channel H1 is severe or how fast the user equipment 400 currently moving, such that the channel prediction parameter could be determined accordingly.

The channel prediction parameter, for example, includes prediction interval d, that represent after how long the base station 200 would like to predict the channel characteristics. For example, for the channel H1 with more severe change, or for the user equipment 400 with faster moving speed, the parameter determination unit 110 may set shorter prediction interval d to obtain more accurate channel prediction result. On the other hand, for the channel H1 with more moderate change, or for the user equipment 400 with slower moving speed, the parameter determination unit 110 may set longer prediction interval d to reduce the workload of base station performing the channel prediction, and to reduce the power consumption of the base station 200.

In another embodiment, the parameter determination unit 110 may also determine other associated parameter(s) of channel prediction, for instance, includes at least one of the following: how many channel data (L) in the pasted time need to use as a prediction base, each time a channel prediction operation is performed; how large of the error correction factor need to set, each time a channel prediction operation is performed; the sampling interval (M) in time-domain or the sampling interval (N) in frequency-domain of the reference signals used by the channel prediction. The aforementioned parameters is taken as example, in the implementation, the parameter determination unit 110 may determine parameter(s) required for the corresponding channel prediction algorithm in accordance with the channel prediction algorithm that the channel prediction unit 230 actually used.

The channel prediction unit 230 is configured to receive the channel prediction parameter (step P3), performing the channel prediction according to the channel prediction parameter(s), to obtain a predicted channel state of the channel H1, and to transmit the predicted channel state to the server 100 (step P4). The channel prediction unit 230 may couple to the wireless communication unit 210 to obtain the channel state information and perform the operation of channel prediction accordingly. The channel prediction performing by the channel prediction unit 230 is controlled by the parameter(s) set by the server 100. For the server 100 considering the change of channel H1 and the speed of the user equipment 400, such that may appropriately adjust the frequency used to transmit the channel prediction back to the server 100 (step P4). As to the severe change channel H1, the base station 200 may use a higher frequency to transmit back, to obtain more accurate channel prediction result; and to the moderate change channel H1, the base station 200 may use a lower frequency to transmit back, to reduce the bandwidth requirements between the base station 200 and the server 100 efficiently.

The precoding calculation unit 120 is configured to receive the predicted channel state (step P4), calculate a precoding parameter according to the predicted channel state, and transmit the precoding parameter to the base station 200 (step P5). The predicted channel state that transmit back from the base station 200 may include multiple channel information, such as the base station 200 is using the channel H1 to communicate with the user equipment 400, the base station 200 is using channel H2 to communicate with the user equipment 500, the precoding calculation unit could calculate the precoding parameter corresponding to these channels according to the predicted channel states of the multiple channels. The precoding parameter may be, for instance, the precoding matrix, the precoding calculation unit 120 may use, for instance, a method of a reverse matrix, a diagonal matrix, a partial diagonal matrix to calculate and obtain the precoding parameter.

The precoding unit 240 is configured to receive the precoding parameter from the server 100, and perform the precoding according to the pre-coded parameter(s). The precoding unit 240 may couple to the wireless communication unit 210, such that the signal transmit from the base station 200 via the wireless communication unit 210 is pre-coded.

The above embodiment illustrate the server 100 communicating with a base station 200, the following embodiment(s) further illustrate the server 100 interacting with the base station 200 and the base station 300. The base station 300 may use the channel H3 to communicate with the user equipment 500, in step P1, the base station 300 may obtain the channel state of the channel H3. In an embodiment, in step P1 may also include the base station 200 obtaining the channel state of the channel H2 from the user equipment 500, and the base station 300 obtaining the channel state of the channel H4 from the user equipment 400. In step P2, the server 100 may respectively receive user condition parameter(s) from the base station 200 and the base station 300, to respectively determine the channel prediction parameter(s) that suitable for the base station 200 and base station 300 accordingly, and in step P3 transmitting each of the channel prediction parameter(s) to the base station 200 and the base station 300 respectively.

In step P4, the precoding calculation unit 120 may receive the predicted channel state from the base station 200, and receive the predicted channel state from the base station 300, and calculate the precoding parameter according to these two predicted channel states. And in step P5, transmitting the calculated precoding parameter to the base station 200 and the base station 300. Because of the precoding calculation unit 120 considers both of the base station 200 and the base station 200 both, such that the calculated precoding parameter may avoid the signal interference between the base station 200 and the base station 300 efficiently. For example, the precoding calculation unit 120 may perform appropriate interpolate operation in the time or frequency domain according to the characteristics of multiple channels that come from the base station 200 and the base station 300, obtain composite matrix relating with the multiple channels, and may determine a joint precoding matrix relating with the base station 200 and the base station 300.

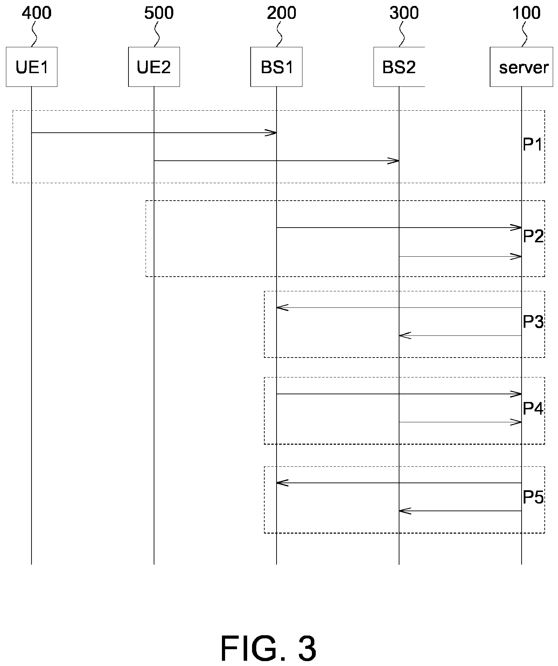

FIG. 3 shows a sequence diagram between a server, base stations, and user equipments in accordance with an embodiment of the invention. In step P1, the user equipment 400 may transmit the channel state information (CSI) to the base station 200, or transmit the reference signal (for example SRS) to the base station 200 to let the base station 200 performing the channel estimation; While using similar manner, the base station 300 may also obtain the channel state to communicate with the user equipment 500. In an embodiment, the step P1 may also include the base station 200 obtain the channel state to communicate with the user equipment 500, and the base station 300 obtain the channel state to communicate with the user equipment 400. Then in step P2, the base station 200 may transmit the calculated user equipment condition parameter(s) to the server 100, in this step P2 the base station 200 may also transmit the identification code of a user equipment and the identification code of the base station to the server 100. Similarly, the base station 300 may transmit the identification code of a user equipment, the identification code of the base station, and the user equipment condition parameter(s) to the server 100. In step P3, the server 100 may transmit the channel prediction parameter that suitable for the base station 200 to the base station 200, to request about the channel state of the user equipment that the base station 200 serving. With the same manner, the server 100 may transmit the channel prediction parameter that suitable for the base station 300 to the base station 300, to request about the channel state of the user equipment(s) that the base station 300 serving. Then in step P4, the base station 200 transmit the predicted channel state associated with the base station 200 back to the server 100, to let the server 100 performing join precoding accordingly. In step P5, the server 100 transmit the precoding parameter to the base station 200 and base station 300, to avoid the interference between the base station 200 and the base station 300.

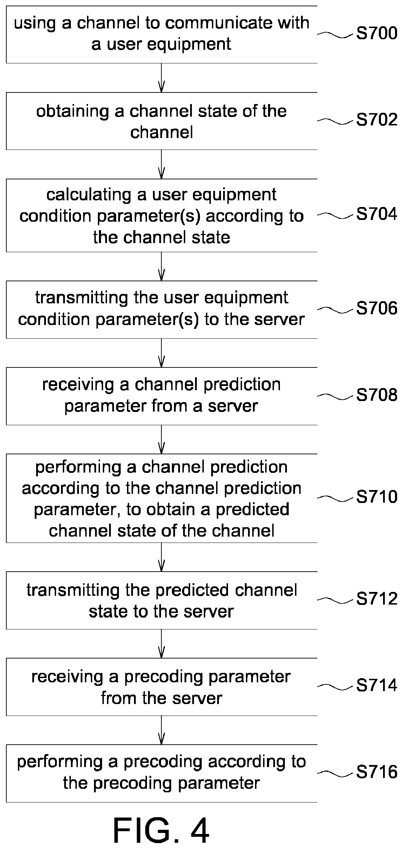

As described in the above embodiment, the channel precoding method that the base station 200 performing could refer to FIG. 4, it shows a flowchart of channel precoding method performing by a base station in accordance with another embodiment of the invention. Step S700: using a channel to communication with a user equipment. Step S702: obtaining a channel state of the channel, for example, the step S700 and the step S702 may perform by the wireless communication unit 210, could correspond to the step P1 of FIG. 2. Step S704: calculating a user equipment condition parameter(s) according to the channel state. Step S706: transmitting the user equipment condition parameter(s) according to the server, for example, the step S704 and S706 may perform by the channel calculation unit 220, could correspond to the step P2 of FIG. 2. Step S708: receiving the channel prediction parameter from the server. Step S710: performing a channel prediction according to the channel prediction parameter, to obtain a predicted channel state of the channel, for example, the step S708 and the step S710 may perform by the channel prediction unit 230, could correspond to the step P3 of FIG. 2. Step S712: transmitting the predicted channel state to the serve, for example, the step S712 may perform by the channel prediction unit 230, could correspond to the step P4 of FIG. 2. Step S714: receiving a precoding parameter from the server. Step S716: performing a precoding according to the precoding parameter, for example, the step S714 and the step S716 may perform by the precoding unit 240, could correspond to the step P5 of FIG. 2.

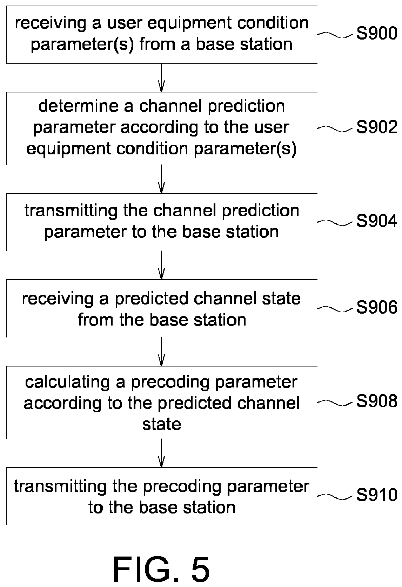

A channel precoding method that a server 100 performing could refer to FIG. 5, it shows a flowchart of channel precoding method performing by a server in accordance with another embodiment of the invention. Step S900: receiving a user equipment condition parameter(s). Step S902 determining a channel prediction parameter according to the user equipment condition parameter(s), for example, the step S900 and the step S902 may perform by the parameter determination unit 110, could correspond to the step P2 of FIG. 2. Step S904: transmitting the channel prediction parameter to the base station, for example, the step S904 may perform by the parameter determination unit 110, could correspond to the step P3 of FIG. 2. Step S906: receiving the predicted channel state from the base station. Step S908: calculating a precoding parameter according to the predicted channel state, for example, the step S906 and the step S908 may perform by the precoding calculation unit 120, could correspond to the step P4 of FIG. 2. Step S910: transmitting the precoding parameter to the base station, for example, the step S910 may perform by the precoding calculation unit 120, could correspond to the step P5 of FIG. 2.

The channel precoding method in accordance with the exemplary embodiments of the invention performing precoding according the channel prediction, thus may have more accurate channel state. If the channel precoding is performed by a server, because of the server is connecting to multiple base stations, one server is responsible for multiple channel prediction associated with the multiple base stations. The workload of the server may be too much, in the embodiment of the invention the channel prediction is performing at the base station, and that may reduce the workload of the server. In the other hand, generally speaking the computing power of the base station is better than the user equipment, in the embodiment of the invention the channel prediction is performing at the base station, and that may achieve a faster computation or use more complex channel prediction algorithm. And avoiding the user equipment performs the channel prediction may reduce the workload and power consumption of the user equipment. While multiple base stations in connection with a common server and transmit respective channel state obtained from a channel prediction to the common server, reach join precoding to solve the signal interference issue.

Furthermore, because of the channel prediction of the base station is controlled by the channel prediction parameter be set by the server, while the channel prediction parameter is determined according to the current state of the user equipment. Therefore the server may determine a better channel prediction parameter, could let the base station transmit the channel prediction result back using a proper frequency. For example, when the change of the channel is large, may transmit more accurate channel prediction result back using a higher frequency; when the change of the channel is small, may transmit back using a lower frequency to reduce the transmission bandwidth between the base station and the server.

In view of the foregoing, the invention has been described above with reference to some embodiments, which, however, are not intended to limit the invention. Various changes and modifications can be made therein without departing from the spirit and scope of the invention by those skilled in the art. Accordingly, the scope of protection of the invention is defined by the appended claims.

## Claims

1. A method of channel precoding applicable for a base station, **characterized in that** the method comprises:
(S700) using a channel to communicate with a user equipment;
(S702) obtaining a channel state of the channel;
(S704) calculating a user equipment condition parameter(s) according to the channel state;
(S706) transmitting the user equipment condition parameter(s) to a server;
(S708) receiving a channel prediction parameter from the server;
(S710) performing a channel prediction according to the channel prediction parameter to obtain a predicted channel state of the channel;
(S712) transmitting the predicted channel state to the server;
(S714) receiving a precoding parameter from the server; and
(S716) performing a precoding according to the precoding parameter.

2. The method according to claim 1, wherein the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

3. The method according to claims 1 or 2, wherein the channel prediction parameter comprises a predicting interval.

4. A method for channel precoding applicable for a server, **characterized in that** the method comprises:
(S900) receiving a user equipment condition parameter(s) from a base station;
(S902) determining a channel prediction parameter(s) according to the user equipment condition parameter(s);
(S904) transmitting the channel prediction parameter to the base station;
(S906) receiving a predicted channel state from the base station;
(S908) calculating a precoding parameter according to the predicted channel state; and
(S910) transmitting the precoding parameter to the base station.

5. The method according to claim 4, wherein the base station uses a channel to communicate with a user equipment, the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

6. The method according to claims 4 or 5, wherein the channel prediction parameter comprises a predicting interval.

7. The method according to any one of claims 4-6, further comprising:
receiving a second predicted channel state from a second base station; and
transmitting the precoding parameter to the second base station,
wherein the precoding parameter is calculated according to the predicted channel state and the second predicted channel state.

8. A base station (200), **characterized in that** the base station (200) comprises:
a wireless communication unit (210), configured to use a channel (H1) to communicate with a user equipment (400) and obtain a channel state of the channel;
a channel calculation unit (220), configured to calculate a user equipment condition parameter(s) according to the channel state and transmit the user equipment condition parameter(s) to a server (100);
a channel prediction unit (230), configured to receive a channel prediction parameter from the server (100), perform a channel prediction according to the channel prediction parameter to obtain a predicted channel state of the channel (H1), and transmit the predicted channel state to the server (100); and
a precoding unit (240), configured to receive a precoding parameter from the server (100) and perform a precoding according to the precoding parameter.

9. The base station according to claim 8, wherein the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

10. The base station according to claims 8 or 9, wherein the channel prediction parameter comprises a predicting interval.

11. The base station according to any one of claims 8-10, further comprising a channel estimation unit that is configured to receive at least one reference signal from the user equipment, and perform a channel estimation according to the at least one reference signal to obtain the channel state.

12. A server (100), **characterized in that** the server comprises:
a parameter determination unit (110), configured to receive a user equipment condition parameter(s), determine a channel prediction parameter according to the user equipment condition parameter(s), and transmit the channel prediction parameter to a base station (200); and
a precoding calculation unit (120), configured to receive a predicted channel state, calculate a precoding parameter according to the predicted channel state, and transmit the precoding parameter to the base station (200).

13. The server according to claim 12, wherein the base station (200) uses a channel to communicate with a user equipment, the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

14. The server according to claims 12 or 13, wherein the channel prediction parameter comprises a predicting interval.

15. The server according to any one of claims 12-14, wherein the precoding calculation unit is configured to receive a second predicted channel state from a second base station (300), and transmit the precoding parameter to the second base station (300).

## Amended claims

### Amended claims in accordance with Rule 137(2) EPC.

1. A method of channel precoding applicable for a base station (200), wherein the method comprises:
(S700) using a channel to communicate with a user equipment; and
(S702) obtaining a channel state of the channel; **characterized by**
(S704) calculating a user equipment condition parameter(s) according to the channel state;
(S706) transmitting the user equipment condition parameter(s) to a server (100);
(S708) receiving a channel prediction parameter from the server (100);
(S710) performing a channel prediction according to the channel prediction parameter to obtain a predicted channel state of the channel;
(S712) transmitting the predicted channel state to the server (100);
(S714) receiving a precoding parameter from the server (100); and
(S716) performing a precoding according to the precoding parameter.

2. The method according to claim 1, wherein the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

3. The method according to claims 1 or 2, wherein the channel prediction parameter comprises a predicting interval.

4. The method according to any one of claims 1 to 3, wherein the (S702) obtaining the channel state of the channel comprises:
receiving at least one reference signal from the user equipment; and
performing a channel estimation according to the at least one reference signal to obtain the channel state.

5. A method for channel precoding applicable for a server, wherein the method comprises:
(S900) receiving a user equipment condition parameter(s) from a base station (200);
(S902) determining a channel prediction parameter(s) according to the user equipment condition parameter(s);
(S904) transmitting the channel prediction parameter to the base station (200);
(S906) receiving a predicted channel state from the base station (200);
(S908) calculating a precoding parameter according to the predicted channel state; and
(S910) transmitting the precoding parameter to the base station (200).

6. The method according to claim 5, wherein the base station (200) uses a channel to communicate with a user equipment, the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

7. The method according to claims 5 or 6, wherein the channel prediction parameter comprises a predicting interval.

8. The method according to any one of claims 5 to 7, further comprising:
receiving a second predicted channel state from a second base station (200); and
transmitting the precoding parameter to the second base station (200),
wherein the precoding parameter is calculated according to the predicted channel state and the second predicted channel state.

9. A base station (200), wherein the base station (200) comprises:
a wireless communication unit (210), configured to use a channel (H1) to communicate with a user equipment (400) and obtain a channel state of the channel; **characterized by**
a channel calculation unit (220), configured to calculate a user equipment condition parameter(s) according to the channel state and transmit the user equipment condition parameter(s) to a server (100);
a channel prediction unit (230), configured to receive a channel prediction parameter from the server (100), perform a channel prediction according to the channel prediction parameter to obtain a predicted channel state of the channel (H1), and transmit the predicted channel state to the server (100); and
a precoding unit (240), configured to receive a precoding parameter from the server (100) and perform a precoding according to the precoding parameter.

10. The base station (200) according to claim 9, wherein the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

11. The base station (200) according to claims 9 or 10, wherein the channel prediction parameter comprises a predicting interval.

12. The base station (200) according to any one of claims 9 to 11, further comprising a channel estimation unit that is configured to receive at least one reference signal from the user equipment, and perform a channel estimation according to the at least one reference signal to obtain the channel state.

13. A server (100), wherein the server (100) comprises:
a parameter determination unit (110), configured to receive a user equipment condition parameter(s), determine a channel prediction parameter according to the user equipment condition parameter(s), and transmit the channel prediction parameter to a base station (200); and
a precoding calculation unit (120), configured to receive a predicted channel state, calculate a precoding parameter according to the predicted channel state, and transmit the precoding parameter to the base station (200).

14. The server (100) according to claim 13, wherein the base station (200) uses a channel to communicate with a user equipment, the user equipment condition parameter(s) comprises at least one of the following: a speed of the user equipment, a Doppler frequency offset of the user equipment, a delay expansion of the channel, a time correlation coefficient of the channel, a frequency correlation coefficient of the channel, and a synchronization timing of the channel.

15. The server (100) according to claims 13 or 14, wherein the channel prediction parameter comprises a predicting interval.

16. The server (100) according to any one of claims 13 to 15, wherein the precoding calculation unit (120) is configured to receive a second predicted channel state from a second base station (300), and transmit the precoding parameter to the second base station (300).
